# EUROPEAN PATENT SPECIFICATION

(11) **EP 2 066 104 B1**
(45) Date of publication and mention of the grant of the patent: **08.06.2016**
(21) Application number: 07022961.2
(22) Date of filing: 27.11.2007
(51) Int. Cl.: H04L 12/14, H04M 15/00

(54) **Telecommunications systems**
Telekommunikationssysteme
Systèmes de télécommunications

(43) Date of publication of application: 03.06.2009
(73) Proprietor: Telefónica Germany GmbH & Co. OHG, 80992 München (DE)
(72) Inventor: Marsden, Roger, 81737 München (DE)
(74) Representative: Herrmann, Uwe

(56) References cited:
- EP-A- 1 296 264
- WO-A-2007/120598
- WO-A-2008/017368
- WO-A1-2007/002577
- US-A1- 2002 156 914
- US-A1- 2003 069 840
- US-A1- 2003 123 628
- US-A1- 2005 237 968
- US-A1- 2007 002 868
- US-A1- 2007 016 907
- US-A1- 2007 123 211
- "3rd Generation Partnership Project; Technical Specification Group Services and System Aspects; Telecommunication management; Charging management; Charging architecture and principles (Release 6); 3GPP TS 32.240" ETSI STANDARDS, EUROPEAN TELECOMMUNICATIONS STANDARDS INSTITUTE, SOPHIA-ANTIPO, FR, vol. 3-SA, no. V600, September 2004 (2004-09), XP014022018 ISSN: 0000-0001

## Description

The present invention relates to a telecommunications system with at least one call or service control element from which a subscriber transaction originates and with one rating and/or charging system.

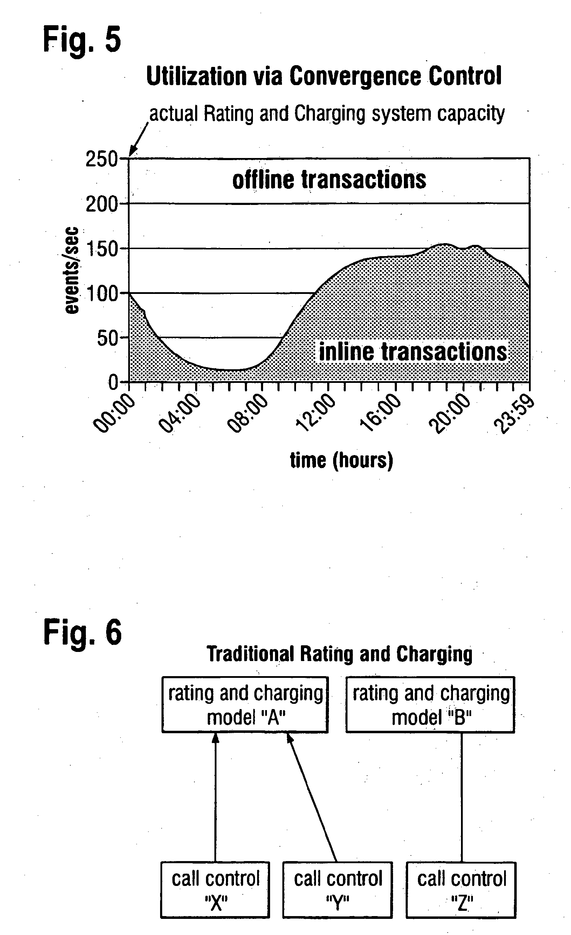

A traditional telephony architecture is shown in figure 6. As may be gathered from this figure all traffic of a given type from a given call control element "X", "Y" or "Z" is pre-assigned to a given rating and charging mechanism ("model") "A" or alternatively "B". These charging models are pre-assigned to given rating and charging systems. The problem which is involved with these known inline (e. g. traditional realtime) rating and charging systems is that these systems have a under-utilisation of their capacity when they are scaled for peak traffic. For example, a peak traffic for inline (realtime) transactions is in the evening hours for which the inline rating and charging system is scaled. For the rest of the day this system is under-utilized.

WO2007/120598 shows a communication network and method for providing converged charging and postpaid charging. In case the subscriber has a hybrid charging contract the charging selection system chooses a rating and/or charging mechanism dependent on the actual date, destination of cal, location of subscriber, etc.. US2007/123211 A1 discloses a telecommunication system with a post-paid and prepaid charging system. The MSC direct an incoming prepaid call to the post-paid system if the prepeaid system is not available.

Further systems with different rating and/or charging mechanism are know from EP 1 296 264 A1, US 2002/156914 A1, WO2007/002577 A1 and US 2007/016907.

It is the object of the present invention to optimally utilize the latent capacity of a rating and/or charging system, in particular of a realtime rating and/or charging system.

This object is solved by a telecommunications system with the features of claim 1.

According to the invention, the telecommunications system comprises at least one call or service control element from which a subscriber transaction(s) originates, with two or more rating and/or charging mechanisms, i.e. methods for rating and/or charging the subscriber transaction(s) and with one rating and/or charging system, wherein the system further comprises at least one convergence control which is adapted to select a rating and/or charging mechanism for said subscriber transaction(s) dependent on one or more criteria. In other words, the present invention provides for a guidance for (a) subscriber transaction(s) which originate(s) from call or service control element(s) in a telecommunications network. Said convergence control is adapted to elect a rating and/or charging mechanism by consideration of criteria as system attributes, wherein one system criteria is the utilized capacity of a the rating and/or charging system. Further criteria may be subscriber and service attributes.

The present invention may be realised as a new capability in the standardized IN Call Control layer of 3GPP or as a new capability of an Online Charging System as standardized in 3GPP or as part of an intermediate layer between call or service control and rating and/or charging elements. This layer or capability will in accordance with the present invention determine which method of rating and/or charging to apply preferably on a transaction per transaction basis. Criteria for electing the rating and/or charging method may be service, subscriber or system (environmental) criteria or a combination thereof.

This layer, i.e. the convergence control may regulate the traffic to the rating and charging system(s).

In one embodiment of the present invention, the determination of the guidance, i. e. the election of the rating and/or charging mechanism chronologically occurs before interaction with the rating and/or charging system. It is conceivable that the determination of the tariff, authorisation quota as well as the identity of the bill payer are not parameters which are used by said convergence control for electing the rating and/or charging mechanism. Those parameters may be encapsulated in the rating and/or charging system. In a preferred embodiment the convergence control does not have any rating or charging knowledge or behaviour.

The term "call or service control element" may be any element of the telecommunications network of the invention from which the any subscriber transaction, such as a voice call, SMS etc. originates. The term "call or service control element" preferably encompasses all standard elements described by 3GPP standard architecture document TS 23.002, together with their interfaces as well as any non-standard element, which plays and active role in the setup and/or delivery of information that is conveyed by means of the standard elements described in 3GPP TS 23.002. The present invention is not restricted to mobile telecommunication systems but refers telecommunication systems in general. Thus, reference is further made for example to general architecture documents, such as ETSI-TISPAN and the ITU-T.

In accordance with a preferred embodiment of the invention the terms rating and charging are defined as follows:
Chronologically, rating occurs before charging. From the received traffic transaction, rating resolves the bill payer and then the applicable tariff to be applied. Rating may also provide a form of authorization, by definition a tariff may be forbidden or not defined for the bill payer, thus rating may decline the transaction (not authorized) even before charging is attempted.

Charging determines the quota - that is the amount of the requested traffic which can be allowed at the identified tariff for the designated bill payer, before further rating and charging actions are deemed necessary. Charging may maintain the account balance and is responsible to adjust the balance upon being notified of quota or part-quota being expended. Charging may also provide a form of authorization in that it will decline transactions (not authorized) in case of insufficient balance.

For example, should the rating receive a not authorized response from charging, the rating function may additionally then use that information and an additional input to re-compute the bill payer and submit a new request to charging for the same transaction. An example being in a community service, a child has insufficient credit at their computed tariff to proceed and is rejected by charging; the rating then changes the bill payer to be the parent and re-computes the tariff according to the new bill payer identity.

The above definitions of the terms "call and service control element", "rating" and "charging" as well as the described cooperation of rating and charging are examples and are not limiting features of the present invention. As an example we refer to 3GPP 32.240. However, it is emphasized that the above terms may have any general meaning, one example of which is given in 3GPP 32.240.

In one embodiment the convergence control is simply evaluating on an automatic basis the rating and/or charging mechanism, i.e. the optimal rating and/or charging method to be used. It does preferably not provide any transactional or relational integrity.

Preferably, the convergence control decouples the rating and/or charging system from the decision and also the knowledge that a particular transaction is inline (realtime) or offline (non-realtime). All of the transactions offered to the rating and/or charging system shall be immediately acted on by that system. Thus the rating and/or charging system can purely perform a functional role as a standardized self-contained system.

This enables or at least facilitates the implementation of a combined, i.e. converged rating and/or charging system which is needed to offer products incorporating a mix of rating and charging methods. Preferably the control element of the present invention, i.e. the convergence control is an active functional element in a fully final convergent architecture (although also as a side benefit facilitates migration).

One of the rating and/or charging mechanisms to be elected may be a so-called "inline mechanism". In this case the subscriber is only allowed to traffic once the rating and/or charging system has completed its authorisation and/or quota allocation. This for example is the case in a classic prepaid payment without subscription.

Further, the rating and/or charging mechanism may be an "offline mechanism". In this case, the subscriber is allowed to traffic immediately, i. e. before the rating and/or charging system is interacted in order to perform the authorisation and quota allocation. In other words, traffic is allowed before rating and/or charging occurs. An example of this off-line mechanism is a subscription based on a monthly invoice.

In a further embodiment of the present invention is an "outline mechanism". In this case the subscriber is allowed to traffic immediately, preferably without restriction. In this case the rating and/ or charging system is never interacted with. An example of this mechanism is a permanent flat rate applicable to all traffic.

Preferably, the convergence control is adapted to select the rating and/or charging mechanism for each transactional event, i.e. on a transaction to transaction basis. While the task of rating and/or charging itself can for example by inline, offline or outline, it is preferred that the task of determining guidance, i. e. the operation of the control element is inline because any traffic candidate for converged rating and/or charging treatment may be, on a per transaction basis, evaluated to a different rating and/or charging mechanism. In other words the control element preferably provides for a realtime transaction management.

The above mentioned criteria are system criteria, Further criteria may for example be subscriber attributes or service attributes.

Such subscriber attributes may be the product or the sub-product. This includes a pack or promotion which for a limited time or periodically qualifies certain traffic to a different rating and/or charging mode.

Another conceivable subscriber attribute is the type of traffic, such as voice calls, voice calls from / to a predefined network, packet data, SMS, MMS.

Subscriber attributes may further be attributes which relate to the subscriber himself such as non-product subscriber attributes, e. g. for how long the subscriber has been subscriber to the operator, assessment of the creditworthiness of the subscriber, previous subscriber payment or traffic behaviour.

The mentioned criteria are merely examples and are therefore no limiting features of the invention.

System criteria may be how busy is the rating and/ or charging system which has been identified from subscriber attribute analysis. If for example, the inline rating and/or charging mechanism has been concluded to be the target method, but the inline system may be overloaded or otherwise not available thus, the control elements may revert instead to the offline rating and/or charging mechanism. If for example, a lot of short message traffic is present on new year's day from a classic prepaid account an offline rating and/or charging mechanism may be elected instead of the inline mechanism.

Thus, in this embodiment the invention allows to rate and/or charge traffic that otherwise would be rejected in times of high load.

Another criterion is for example from which source does the subscriber transaction originate, e. g. transaction from a particular source may always be inherently offline.

Thus, in a preferred embodiment providing regulation of events of a particular rating and/or charging mechanism, towards a given rating and/or charging system, is a core capability of the control system. According to the invention the convergence control is aware of the throughput or utilized capacity of each target rating and/or charging system, in particular relative to the rating and/or charging mechanism(s) supported. Alternatively, the convergence control receives a feedback from each rating and/or charging system, notifying the current loading of that rating and/or charging system. The control element (convergence control) can be set to comprise a series of rules hierarchical in nature, incorporating both subscriber attributes and environmental criteria.

In a further embodiment of the invention the system comprises one or more than one rating and/or charging system wherein the charging system(s) comprises an active and a standby site for geographical redundancy. The invention also encompasses active-active (load-sharing) scenarios as well as scenarios where there are more than tow load-sharing sites.

The convergence control of the present invention may also influence the sourcing of the transactions themselves In a first embodiment in case of an inline treatment, the convergence control shall send the transaction to the rating and/or charging system immediately. However, in case of an offline treatment, it shall instead pass control to the transaction back to the call control from which it was sourced with the instruction that all further events arising from this same transaction shall be aggregated together and re-sent to the convergence control, i. e. to the control element of the system as a single compound transaction once the transaction has ended.

This final and single aggregated transaction is by definition offline. It may be represented to the convergence control via a call or service control or a non-call/service control element.

However, should the convergence control determine an outline treatment it shall pass control of the transaction back to the call or service control from which it was sourced with the instruction that all further events arising shall not be notified back to the convergence control and shall not be aggregated. In this case, there is no interaction with a rating and/or charging system.

In this way, the telecommunications system according to the present invention is able to maintain a consistent volume of transactions to a given rating and or charging system have a defined capacity where at any given point in time capacity is given to inline transactions and the residual capacity given to offline transactions.

A consequence of the present system then is that the rating and/or charging system itself is logically unaware of the inline or offline attribute of the transaction. The rating and/or charging system simply rates and/or charges all transactions presented to it by the control element.

An advantage of the invention is that the invention allows to significantly improve utilizing (preferably to 100 %) of their capacity over an operational cycle which results in a significant reduction of the costs. Further, as mentioned above, the invention allows to rate and charge traffic which would otherwise be rejected.

The present invention may, for example, refer to a mobile telecommunications system or a fixed (or converged) telecommunications system.

Further embodiments and advantages of the present invention are explained by use of the following drawings:
- Figure 1:: the convergence control according to the present invention,
- Figure 2:: transactions between call control and the rating and charging system for different rating and charging mechanisms,
- Figure 3:: transactions between the call control and a rating and charging system with a periodic quota/authorisation request,
- Figure 4:: transactions between the call control, convergence control and the rating and charging system in case of inline treatment, offline treatment and outline treatment,
- Figure 5:: utilisation of a rating and charging system by use of the present invention and
- Figure 6:: the prior art rating and charging system.

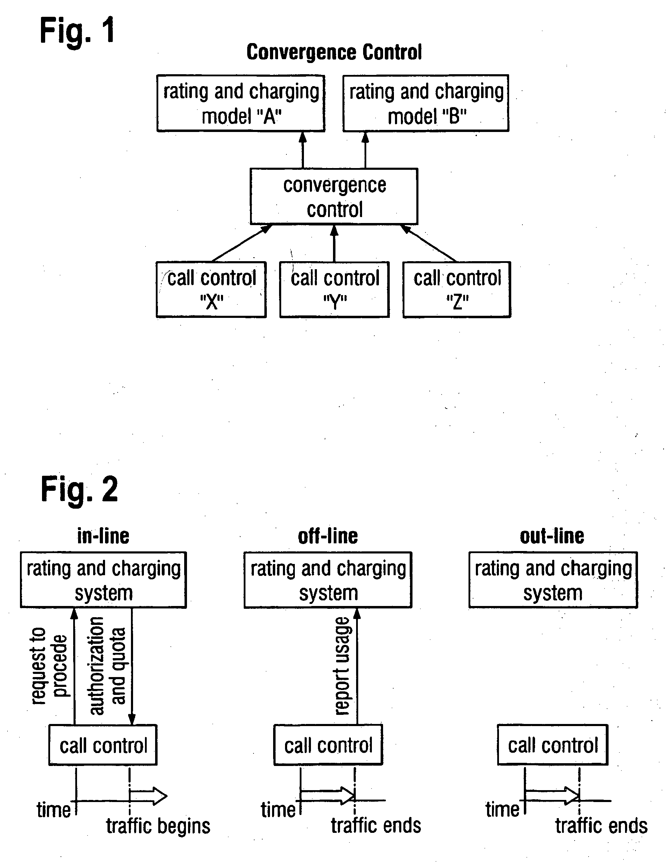

Figure 1 shows the "convergence control system" according to the present invention. The term "rating and charging model" which is used in this figure is synonymously used for the aforementioned rating and charging mechanism. As may be gathered from figure 1 regardless of the originating call control ("X", "Y" or "Z") the guidance by means of the convergence control, i.e. the control element according to the present invention, determines on a per transaction basis the rating and charging mechanism (and system). This determination may result in that subsequent and otherwise identical transactions from the same call control are handled by different rating and charging methods.

Figure 2 depicts three conceivable rating and charging mechanism which may be elected in accordance with the present invention. In case of inline treatment the call control sends a request to procedure to the rating and charging system which then sends back authorisation and quota. Thereafter traffic begins. This inline system is for example used in a classic prepaid payment without subscription.

In case of an offline treatment the call begins without transacting with the rating and charging system. After ending of the traffic a report of the usage is sent to the rating and charging system. Authorisation and quota allocation are performed after usage. An example thereof is a post-paid payment system.

In case of an outline treatment there is no interaction between the call control and the rating and charging system. An example of this system is a permanent flat rate applicable to all traffic.

The subscriber transaction itself comprises any invent(s) which demands a rating and/or charging treatment. The transaction may be a singular independent event, i. e. rate and charge of a short message or i. e. rate and charge of an already completed aggregated set of transaction events. Or, the subscriber transaction may be one which is not independent of others.

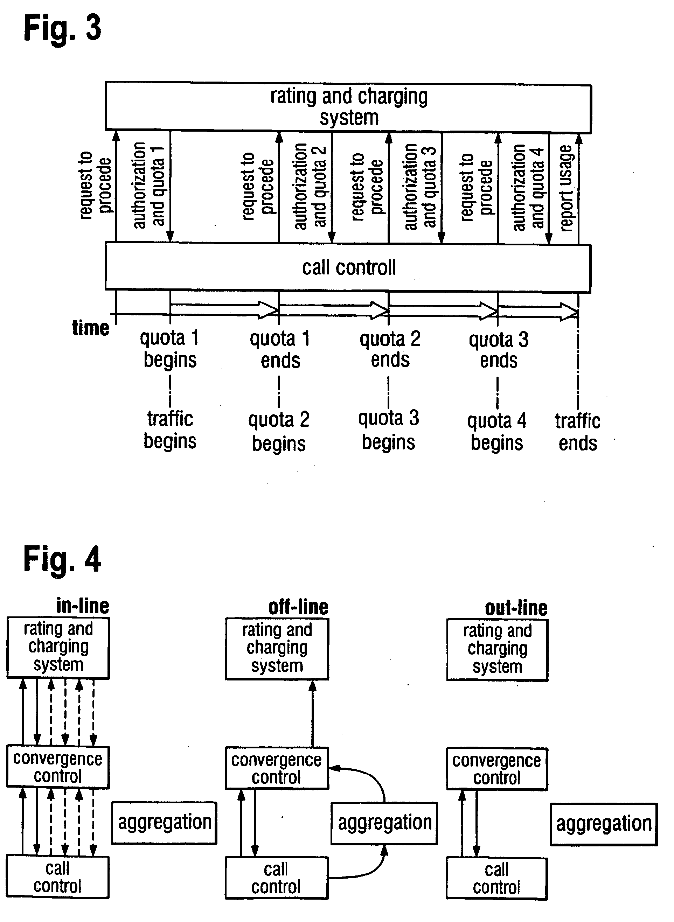

For example, the subscriber transaction may be periodic quota/authorisation requests to the rating and charging system which is shown in figure 3. This procedure may occur during a voice call or even more frequently during a packet data session. As shown in figure 3 there is a repeated interaction between the call control by requesting to proceed to the rating and charging system. The rating and charging system responds by authorisation and a certain quota. After this quota has ended a new request to proceed is sent from the call control to the rating and charging system and the process is repeated until end of traffic. The call control adapts the quota accordingly to any traffic which occurs in the short finite time for the request/authorisation sequence.

Figure 4 shows that the control element, i.e. the convergence control may also be adapted to influence the sourcing of the transactions themselves.

In case of figure 4, left picture, the control element (convergence control) sends the transaction to the rating and charging system immediately in case of an inline treatment.

As shown in figure 4, second picture, the control element (convergence control) passes control of the transaction back to the call control from which it was sourced together with the instruction that all further events arising from this same transaction shall be aggregated together and resent to the convergence control as a single compound transaction once the transaction has ended. The term "aggregation" means the aggregation of all events of the same transaction. This final aggregated transaction is presented to the control element either via a call control or a non-call control element.

In case of an outline treatment (figure 4, right picture) the call control shall instead pass control of the transaction back to the call control from which it was sourced with the instruction that all further events arising shall not be notified back to the control element and shall not be aggregated.

The control element (convergence control) is able to maintain a consistent volume of transactions to a given rating and charging system having a finite capacity. As shown in figure 5 capacity is given to inline transactions and the residual capacity is given to offline transactions. In this case the rating and charging system itself is logically unaware of the inline or offline attribute of the transaction. It simply rates and charges all transactions presented to it by the control element (convergence control).

## Claims

1. Telecommunications system with at least one call or service control element from which a subscriber transaction(s) originates, with two or more rating and/or charging mechanisms for rating and/or charging the subscriber transaction(s) and with one rating and/or charging system, wherein the system further comprises at least one convergence control which is adapted to select a rating and/or charging mechanism for said subscriber transaction(s) dependent on one or more criteria,
**characterised in**
**that** said criteria are system criteria, wherein one system criteria is the utilized capacity of the rating and/or charging system and wherein the convergence control is adapted to be aware of the throughput or utilized capacity of the rating and/or charging system.

2. Telecommunications system according to claim 1, wherein a rating and/or charging mechanism is an inline mechanism which allows a subscriber to make a transaction after authorization and/or quota allocation has been positively completed by the rating and/or charging system.

3. Telecommunications system according to claim 1, wherein a rating and/or charging mechanism is an offline mechanism, which allows a subscriber to make a transaction before the functions of the rating and/or charging system are invoked.

4. Telecommunications system according to any one of claims 1 to 3, wherein the rating and/or charging mechanism is an outline mechanism, wherein a subscriber is allowed to make a transaction without interaction with the rating and/or charging system.

5. Telecommunications system according to any one of the preceding claims wherein the convergence control is adapted to select the rating and/or charging mechanism for each transactional event.

6. Telecommunication system according to any one of the preceding claims wherein the convergence control is adapted to select the rating and/or charging mechanism in realtime.

7. Telecommunications system according to any one of the preceding claims wherein further criteria are subscriber attributes and/or service attributes.

8. Telecommunications system according to claim 7, wherein subscriber attributes are the product or service being used, the type of traffic or characteristics of the subscriber himself.

9. Telecommunications system according to any one of the preceding claims, wherein another system criteria is the source from which the subscriber transaction originates.

10. Telecommunications system according to any one of the preceding claims, wherein the convergence control is adapted to reselect a new rating and/or charging mechanism if the rating and/or charging system assigned to the initially selected rating and/or charging mechanism is overloaded.

11. Telecommunications system according to any one of the preceding claims, wherein the rating and/or charging system is adapted to provide the convergence control with its throughput or utilized capacity.

12. Telecommunications system according to any one of the preceding claims, wherein tariff and/or authorization quota and/or the identity of the bill payer are no criteria for selecting a rating and/or charging mechanism.

13. Telecommunications system according to any one of the preceding claims, wherein the system comprises more than one rating and/or charging system, wherein the charging systems comprise an active and a standby site for geographical redundancy.

14. Telecommunications system according to any one of the preceding claims, wherein the convergence control is adapted to send a transaction to the rating and/or control system immediately in case of an inline treatment.

15. Telecommunications system according to any one of the preceding claims, wherein the convergence control is adapted to aggregate or to instruct to aggregate further events from the same transaction in case of an offline treatment.

16. Telecommunications system according to any one of the preceding claims, wherein the convergence control is adapted to instruct the call control that all further events shall not be notified back to the convergence control and shall not be aggregated in case of an outline treatment.

17. Telecommunications system according to any one of the preceding claims, wherein the telecommunications system is a mobile or a fixed or converged telecommunications system.

## Patentansprüche

1. Telekommunikationssystem mit mindestens einem Anruf- oder Servicesteuerelement, von dem eine Teilnehmertransaktion(en) ausgeht, mit zwei oder mehr Tarifierungs- und/oder Vergebührungsmechanismen zum Tarifieren und/oder Vergebühren der Teilnehmertransaktion(en) und mit einem Tarifierungs- und/oder Vergebührungssystem, wobei das System weiterhin mindestens eine Konvergenzsteuerung umfasst, die ausgelegt ist, um abhängig von einem Kriterium oder mehreren Kriterien einen Tarifierungs- und/oder Vergebührungsmechanismus für die Teilnehmertransaktion(en) zu wählen,
**dadurch gekennzeichnet, dass**
die Kriterien Systemkriterien sind, wobei ein Systemkriterium die genutzte Kapazität des Tarifierungs- und/oder Vergebührungssystem ist und wobei die Konvergenzsteuerung ausgelegt ist, um den Durchsatz oder die genutzte Kapazität des Tarifierungs- und/oder Vergebührungssystems zu kennen.

2. Telekommunikationssystem nach Anspruch 1, wobei ein Tarifierungs- und/oder Vergebührungsmechanismus ein Inline-Mechanismus ist, der einem Teilnehmer das Ausführen einer Transaktion ermöglicht, nachdem von dem Tarifierungs- und/oder Vergebührungssystem eine Autorisierung und/oder Quotenzuteilung positiv abgeschlossen wurde.

3. Telekommunikationssystem nach Anspruch 1, wobei ein Tarifierungs- und/oder Vergebührungsmechanismus ein Offline-Mechanismus ist, der einem Teilnehmer das Ausführen einer Transaktion ermöglicht, bevor die Funktionen des Tarifierungs- und/oder Vergebührungssystems aufgerufen werden.

4. Telekommunikationssystem nach einem der Ansprüche 1 bis 3, wobei der Tarifierungs- und/oder Vergebührungsmechanismus ein Outline-Mechanismus ist, wobei einem Teilnehmer das Ausführen einer Transaktion ohne Interaktion mit dem Tarifierungs- und/oder Vergebührungssystem ermöglicht wird.

5. Telekommunikationssystem nach einem der vorhergehenden Ansprüche, wobei die Konvergenzsteuerung ausgelegt ist, um den Tarifierungs- und/oder Vergebührungsmechanismus für jeden Transaktionsvorgang zu wählen.

6. Telekommunikationssystem nach einem der vorhergehenden Ansprüche, wobei die Konvergenzsteuerung ausgelegt ist, um den Tarifierungs- und/oder Vergebührungsmechanismus in Echtzeit zu wählen.

7. Telekommunikationssystem nach einem der vorhergehenden Ansprüche, wobei weitere Kriterien Teilnehmerattribute und/oder Serviceattribute sind.

8. Telefkommunikationssystem nach Anspruch 7, wobei Teilnehmerattribute das genutzte Produkt oder der genutzte Service, die Art der Verbindung oder Eigenschaften des Teilnehmers selbst sind.

9. Telekommunikationssystem nach einem der vorhergehenden Ansprüche, wobei ein anderes Systemkriterium die Quelle ist, von der die Teilnehmertransaktion ausgeht.

10. Telekommunikationssystem nach einem der vorhergehenden Ansprüche, wobei die Konvergenzsteuerung ausgelegt ist, um einen neuen Tarifierungs- und/oder Vergebührungsmechanismus neu zu wählen, wenn das dem anfänglich gewählten Tarifierungs- und/oder Vergebührungsmechanismus zugeordnete Tarifierungs- und/oder Vergebührungssystem überlastet ist.

11. Telekommunikationssystem nach einem der vorhergehenden Ansprüche, wobei das Tarifierungs- und/oder Vergebührungssystem ausgelegt ist, um dessen Durchsatz oder genutzte Kapazität der Konvergenzsteuerung zukommen zu lassen.

12. Telekommunikationssystem nach einem der vorhergehenden Ansprüche, wobei Tarif und/oder Autorisierungsquote und/oder die Identität des Zahlungspflichtigen keine Kriterien zum Wählen eines Tarifierungs- und/oder Vergebührungsmechanismus sind.

13. Telekommunikationssystem nach einem der vorhergehenden Ansprüche, wobei das System mehr als ein Tarifierungs- und/oder Vergebührungssystem umfasst, wobei das Vergebührungssystem für geographische Redundanz einen aktiven und einen Standby-Standort umfasst.

14. Telekommunikationssystem nach einem der vorhergehenden Ansprüche, wobei die Konvergenzsteuerung ausgelegt ist, um im Fall einer Inline-Behandlung dem Tarifierungs- und/oder Steuersystem sofort eine Transaktion zu senden.

15. Telekommunikationssystem nach einem der vorhergehenden Ansprüche, wobei die Konvergenzsteuerung ausgelegt ist, um im Fall einer Offline-Behandlung weitere Vorgänge aus der gleichen Transaktion zusammenzufassen oder Befehle zum Zusammenfassen derselben zu geben.

16. Telekommunikationssystem nach einem der vorhergehenden Ansprüche, wobei die Konvergenzsteuerung ausgelegt ist, um die Anrufsteuerung anzuweisen, dass im Fall einer Outline-Behandlung alle weiteren Vorgänge nicht der Konvergenzsteuerung rückgemeldet werden und nicht zusammengefasst werden.

17. Telekommunikationssystem nach einem der vorhergehenden Ansprüche, wobei das Telekommunikationssystem ein Mobil- oder Festnetz- oder konvergentes Telekommunikationssystem ist.

## Revendications

1. Système de télécommunications doté d'au moins un élément de contrôle d'appel ou de service duquel découle(nt) une/des transaction(s) d'abonné, de deux mécanismes de tarification et/ou de facturation ou plus destinés à tarifer et/ou facturer la/les transaction(s) d'abonné et d'un système de tarification et/ou de facturation, le système comprenant en outre au moins un contrôle de convergence qui est adapté pour sélectionner un mécanisme de tarification et/ou de facturation pour ladite/lesdites transaction(s) d'abonné en fonction d'un ou de plusieurs critères,
**caractérisé en ce que**
lesdits critères sont des critères de système, un critère de système étant la capacité utilisée du système de tarification et/ou de facturation et le contrôle de convergence étant adapté pour avoir connaissance du débit ou de la capacité utilisée du système de tarification et/ou de facturation.

2. Système de télécommunications selon la revendication 1, dans lequel un mécanisme de tarification et/ou facturation est un mécanisme en ligne qui autorise un abonné à effectuer une transaction après qu'une attribution d'autorisation et/ou de quota a été exécutée avec succès par le système de tarification et/ou de facturation.

3. Système de télécommunications selon la revendication 1, dans lequel un mécanisme de tarification et/ou de facturation est un mécanisme hors ligne qui autorise un abonné à effectuer une transaction avant que les fonctions du système de tarification et/ou de facturation soient appelées.

4. Système de télécommunications selon l'une quelconque des revendications 1 à 3, dans lequel le mécanisme de tarification et/ou de facturation est un mécanisme-cadre, dans lequel un abonné est autorisé à effectuer une transaction sans interaction avec le système de tarification et/ou de facturation.

5. Système de télécommunications selon l'une quelconque des revendications précédentes, dans lequel le contrôle de convergence est adapté pour sélectionner le mécanisme de tarification et/ou de facturation pour chaque événement transactionnel.

6. Système de télécommunications selon l'une quelconque des revendications précédentes, dans lequel le contrôle de convergence est adapté pour sélectionner le mécanisme de tarification et/ou de facturation en temps réel.

7. Système de télécommunications selon l'une quelconque des revendications précédentes, dans lequel d'autres critères sont des attributs d'abonné et/ou des attributs de service.

8. Système de télécommunications selon la revendication 7, dans lequel les attributs d'abonné sont le produit ou le service en cours d'utilisation, le type de trafic ou des caractéristiques de l'abonné lui-même.

9. Système de télécommunications selon l'une quelconque des revendications précédentes, dans lequel un autre critère de système est la source de laquelle découle la transaction d'abonné.

10. Système de télécommunications selon l'une quelconque des revendications précédentes, dans lequel le contrôle de convergence est adapté pour resélectionner un nouveau mécanisme de tarification et/ou de facturation si le système de tarification et/ou de facturation associé au mécanisme de tarification et/ou de facturation initialement sélectionné est surchargé.

11. Système de télécommunications selon l'une quelconque des revendications précédentes, dans lequel le système de tarification et/ou de facturation est adapté pour transmettre son débit ou sa capacité utilisée au contrôle de convergence.

12. Système de télécommunications selon l'une quelconque des revendications précédentes, dans lequel le tarif et/ou le quota d'autorisation et/ou l'identité du payeur de la facture ne sont pas des critères pour la sélection d'un mécanisme de tarification et/ou de facturation.

13. Système de télécommunications selon l'une quelconque des revendications précédentes, dans lequel le système comprend plus d'un système de tarification et/ou de facturation, dans lequel les systèmes de facturation comprennent un site actif et un site en attente pour la redondance géographique.

14. Système de télécommunications selon l'une quelconque des revendications précédentes, dans lequel le contrôle de convergence est adapté pour envoyer une transaction au système de tarification et/ou de facturation immédiatement en cas d'un traitement en ligne.

15. Système de télécommunications selon l'une quelconque des revendications précédentes, dans lequel le contrôle de convergence est adapté pour agréger ou donner l'instruction d'agréger d'autres événements de la même transaction en cas d'un traitement hors ligne.

16. Système de télécommunications selon l'une quelconque des revendications précédentes, dans lequel le contrôle de convergence est adapté pour donner l'instruction au contrôle d'appel que tous les autres événements ne seront pas communiqués en retour au contrôle de convergence et ne seront pas agrégés en cas d'un traitement hors ligne.

17. Système de télécommunications selon l'une quelconque des revendications précédentes, dans lequel le système de télécommunications est un système de télécommunications mobile ou fixe ou convergent.
